# EUROPEAN PATENT APPLICATION

(11) **EP 2 717 124 A1**
(43) Date of publication of application: **09.04.2014**
(21) Application number: 12187176.8
(22) Date of filing: 04.10.2012
(51) Int. Cl.: G06F 3/038, G06F 3/0354

(54) **Method and apparatus pertaining to an interference-assessing stylus**

(71) Applicant: BlackBerry Limited, Waterloo, ON N2K 0A7 (CA)
(72) Inventor: Singh, Amit Pal, Waterloo, Ontario N2L 3W8 (CA); Parekh, Premal, Waterloo, Ontario N2L 3W8 (CA)
(74) Representative: Bryn-Jacobsen, Caelia

(57) **Abstract**

A stylus is configured to use a local wireless receiver to assess interference at a transmission frequency that corresponds to the stylus's location-information wireless transmitter. By one approach, the stylus carries out this assessment during transmission nulls for the location-information wireless transmitter. If desired, the wireless receiver can operably couple to (and hence share) a same antenna that operably couples to the location-information wireless transmitter. By one approach, the stylus is configured to change the transmission frequency of the location-information wireless transmitter as a function of determining that the aforementioned assessed transmission frequency is experiencing more than a predetermined level of interference.

## Description

### Field of Technology

The present disclosure relates to styli that serve as a user-input interface for an electronic device.

### Background

Stylus-based user interfaces are known in the art. Generally speaking, a stylus is typically a hand-held writing utensil that often (but not exclusively) has a pencil-like elongated form factor and that includes at least one pointed end configured to serve as a writing tip by interacting with a scribing surface. Using a stylus as an input mechanism with a display offers a variety of advantages over a fingertip including the opportunity for increased precision as well as an expression modality that accords with the user's own past experience with a pencil or pen.

In some cases the stylus comprises an active device that transmits a signal using a radio-frequency carrier. This signal serves, for example, as a location beacon that the display device utilizes, for example, to confirm the proximity of the stylus and/or to facilitate accurate tracking of the stylus's movement with respect to the scribing surface. To conserve power, the stylus typically only transmits such a signal on an intermittent basis.

Unfortunately, intermittent interference can impair transmissions at the operative frequency of the radio-frequency carrier. Such interference, in turn, can render use of the stylus impaired or even wholly unavailable for use. Such a circumstance can then lead to user dissatisfaction.

### Brief Description of the Drawings

FIG. 1 is a flow diagram in accordance with the disclosure.

FIG. 2 is a block diagram in accordance with the disclosure.

FIG. 3 is a timing diagram in accordance with the prior art.

FIG. 4 is a timing diagram in accordance with the disclosure.

### Detailed Description

The following describes an apparatus and method pertaining to a stylus configured to use a local wireless receiver to assess interference at a transmission frequency that corresponds to the stylus's location-information wireless transmitter. By one approach, the stylus carries out this assessment during transmission nulls for the location-information wireless transmitter. If desired, the wireless receiver can operably couple to (and hence share) a same antenna that operably couples to the location-information wireless transmitter.

By one approach, the stylus is configured to change the transmission frequency of the location-information wireless transmitter as a function of determining that the aforementioned assessed transmission frequency is experiencing more than a predetermined level of interference.

These teachings are highly flexible in practice and will accommodate any number of modifications and embellishments. As but one example in these regards, the stylus can further include a use sensor configured to detect stylus use. This use sensor can comprise, for example, a pressure sensor that senses scribing pressure that occurs when a user employs the stylus to scribe on a given scribing surface. So configured, the stylus can be further configured to only use the wireless receiver as described above to assess the aforementioned interference when the user sensor also detects current (or, if desired, recent) use of the stylus. Such an approach can serve, for example, to conserve power by avoiding wireless receiver usage during times when the stylus is unused.

So configured, such a stylus can help to ensure viable operational status even in the presence of an interfering signal. By detecting such interference and by responding in a useful work-around manner, such a stylus can help to ensure user satisfaction. These teachings are also highly scalable and can be used with any number of radio-frequency carriers and with a wide variety of operating protocols.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

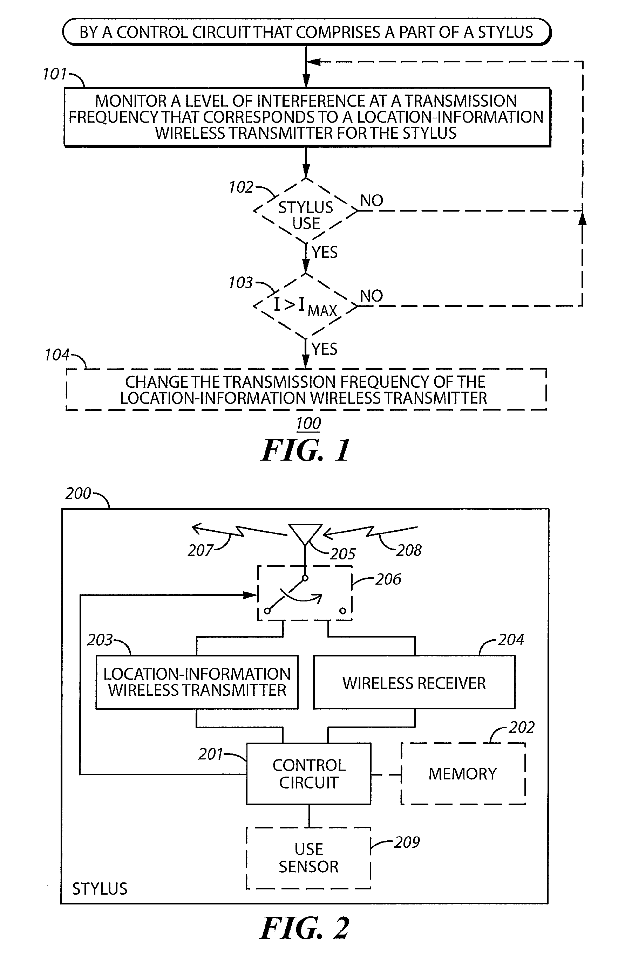

FIG. 1 presents a process 100 that accords with many of these teachings. For the sake of an illustrative example it will be presumed that a control circuit of choice carries out this process 100. FIG. 2 provides a useful illustrative example in these regards.

Per this example, a stylus 200 includes such a control circuit 201. This control circuit 201 can comprise a fixed-purpose hard-wired platform or can comprise a partially or wholly-programmable platform. These architectural options are well known and understood in the art and require no further description here. This control circuit 201 is configured (for example, by using corresponding programming as will be well understood by those skilled in the art) to carry out one or more of the steps, actions, and/or functions described herein.

If desired, this control circuit 201 can optionally couple to a memory 202. The memory 202 may be integral to the control circuit 201 or can be physically discrete (in whole or in part) from the control circuit 201 as desired. This memory 202 can serve, for example, to non-transitorily store the computer instructions that, when executed by the control circuit 201, cause the control circuit 201 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM)).

In any event the control circuit 201 also operably couples to a location-information wireless transmitter 203 and a wireless receiver 204. The location-information wireless transmitter 203 is configured to transmit location-information as pertains to the location of part (or parts or all) of the stylus, often with respect to a given corresponding scribing surface. Various approaches and protocols are known in these regards and can be applied satisfactorily in these regards. For the sake of the present example it will be presumed that the location-information wireless transmitter 203 uses, at any given time, a particular radio-frequency transmission frequency when transmitting the location information. It will also be presumed here, for the sake of illustration, that the location-information wireless transmitter 203 comprises a frequency-agile platform that is capable of transmitting at any of a plurality of selected transmission frequencies (as directed, for example, by the aforementioned control circuit 201).

The wireless receiver 204 is configured to selectively monitor at least one radio frequency of interest. For many application settings it can be beneficial if the wireless receiver 204 is also frequency agile and capable of selectively monitoring any of a plurality of such radio frequencies. So configured, the wireless receiver 204 can serve, for example, to monitor whatever radio-frequency carrier the location-information wireless transmitter 204 might be configured to employ at any given time.

By one approach the location-information wireless transmitter 203 and the wireless receiver 204 share a same antenna 205. In this case, and by one approach, an antenna switch 206 that operably couples to both the location-information wireless transmitter 203 and the wireless receiver 204 can selectively connect one of these platforms at a time to the antenna 205. By one approach, such an antenna switch 206 operably couples to the control circuit 201 to thereby permit the latter to control the switch settings of the antenna switch 206.

So configured, the stylus 200 can transmit location information using the location-information wireless transmitter 203 that transmits a selected radio-frequency carrier 207 and can also receive interfering signals 208 (when present at a monitored frequency) by use of the wireless receiver 204.

If desired, the stylus 200 can also optionally include a use sensor 209 that operably couples to the control circuit 201. By one approach this use sensor 209 can comprise a pressure sensor that is configured to sense scribing pressure. For example, the pressure sensor may sense compression of a writing tip (not shown) of the stylus 200. Stylus pressure sensors are known in the art. As the present teachings are not overly sensitive to any particular selections in these regards, further elaboration here will be avoided for the sake of brevity.

It will be understood that the components described above are typically disposed at least partially (and often wholly) within the stylus 200.

Referring again to FIG. 1, pursuant to this process 100 the control circuit 201 can use the aforementioned wireless receiver 204 to monitor 101 a level of interference that may presently (or recently - say, within the last few milliseconds such as the last 1 to 5 milliseconds) correspond to the radio-frequency carrier being used by the location-information wireless transmitter 203 to transmit location information for the stylus 200.

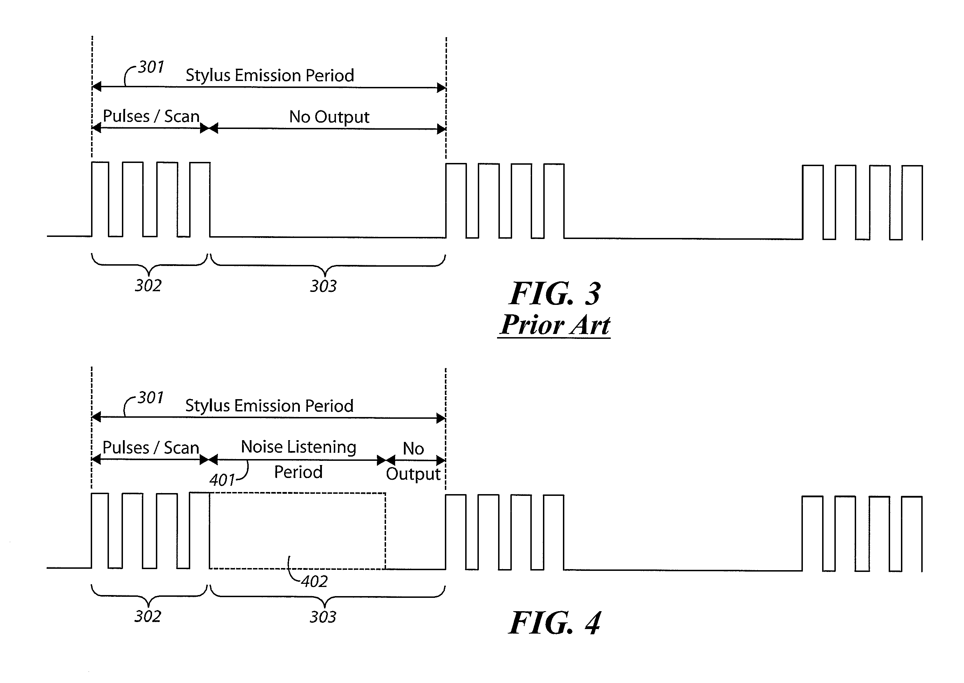

FIG. 3 depicts a prior art approach to a transmission protocol for a stylus location-information wireless transmitter 203. This protocol provides a series of stylus emission periods 301 that each include a first window 302 during which the location information-bearing content is transmitted. In this example, this content comprises a series of pulses for which the scribing surface (not shown) scans to thereby determine a particular location of at least a portion of the stylus 200.

It will be noted that, per this protocol, a second window 303 follows the active transmission first window 302 and during which there is no transmission activity. Referring now to FIG. 4, the aforementioned monitoring activity 402 can take place during a corresponding noise listening period 401 that the control circuit 201 schedules to occur during the second window 303 that comprises a transmission null and hence is bereft of any active transmission activity on the part of the stylus 200. As much of the second window 303 can be employed as may be desired to suit the needs of a given application setting. In many cases, and as illustrated, this monitoring activity 402 need not necessarily consume the entire second window 303. Being suitably sparing in these regards can aid in minimizing power consumption by the components of the stylus 200.

Referring again to FIG. 1, this process 100 will optionally accommodate determining 102 whether the stylus 200 is presently being used. When the stylus 200 includes a use sensor 209 as mentioned above, the control circuit 201 can refer to input from that use sensor 209 to facilitate making this determination 102. When the stylus 200 is not being used, this process 100 can provide for continuing to monitor interference levels if desired but not otherwise taking any particular proactive actions. Such an approach can again help to conserve stylus power without likely impairing operating performance.

As another related approach, if desired, such a use-monitoring activity can occur instead prior to conducting the aforementioned monitoring activity. In this case, such monitoring can itself be avoided unless and until the user actually uses the stylus.

This process 100 will also optionally accommodate assessing interference by, for example, determining 103 whether the monitored/detected interference (I) at least exceeds a predetermined threshold (I_{MAX}). So long as any detected interference remains below such a threshold the process 100 can simply continue to repeat the foregoing steps. In the presence of undue interference, however, this process 100 can optionally provide for changing 104 the transmission frequency of the location-information wireless transmitter 203 to thereby attempt to use a frequency that is not subject (or as subject) to the interfering signal.

In many cases the scribing surface (not shown) scans for a range of transmission frequencies. In such a case, the stylus 200 can simply change its transmission frequency upon detecting too much interference. If desired, however, these teachings will accommodate having the control circuit 201 transmit a signal to the scribing surface to specifically indicate that the stylus 200 is switching (or has switched) to a different transmission frequency. By one approach this signal can include an identifier that specifies the particular transmission frequency now being applied.

So configured, a stylus can proactively participate in determining when its own signaling may be subject to undue interference and in responsively changing its transmission frequency when such is the case. These teachings will also support such activity in ways that are respectful of power consumption to thereby extend the stylus's operating lifetime using a given battery or charging cycle.

The present disclosure may be embodied in other specific forms without departing from its essential characteristics. As one example in these regards, the wireless receiver 204 can comprise a broadband receiver that is capable of detecting interference over a wider bandwidth than merely the particular carrier frequency being employed by the location-information wireless transmitter 203. In this case, the control circuit 201 may be able to knowingly avoid using a number of transmission frequencies that all fall within a range of frequencies where the wireless receiver 204 can detect undue interference.

As another example in these regards, this process 100 will accommodate requiring that an undue level of interference be detected for more than a single monitoring cycle before switching the transmission frequency. For example, it may be useful to require that the interference persist for at least a given number of monitoring cycles or for at least a given period of time before taking a responsive action.

The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a stylus (200);
a location-information wireless transmitter (203) disposed at least partially within the stylus;
a wireless receiver (204) disposed at least partially within the stylus;
a control circuit (201) operably coupled to the location-information wireless transmitter and the wireless receiver and configured to use (101, 103) the wireless receiver to assess interference at a transmission frequency that corresponds to the location-information wireless transmitter.

2. The apparatus of claim 1 wherein the control circuit is configured to use the wireless receiver to assess interference during transmission nulls for the location-information wireless transmitter.

3. The apparatus of claim 1 wherein the control circuit is configured to change (104) the transmission frequency of the location-infolmation wireless transmitter as a function of determining the transmission frequency is experiencing more than a predetermined level of interference.

4. The apparatus of claim 1 wherein the transmission frequency comprises a radio-frequency transmission frequency.

5. The apparatus of claim 1 further comprising an antenna (205) that operably couples to both the wireless receiver and the location-information wireless transmitter.

6. The apparatus of claim 1 further comprising:
a use sensor (209) configured to detect stylus use and disposed within the stylus and operably coupled to the control circuit, the control circuit being further configured to only use the wireless receiver to assess interference at the transmission frequency when (102) the use sensor detects use of the stylus.

7. The apparatus of claim 6 wherein the use sensor comprises a pressure sensor configured to sense scribing pressure.

8. A method comprising:
by a control circuit (201) that comprises a part of a stylus (200):
monitoring (101) a level of interference at a transmission frequency that corresponds to a location-information wireless transmitter for the stylus.

9. The method of claim 8 wherein monitoring the level of interference at the transmission frequency comprises only monitoring the level of interference during transmission nulls (303) for the location-information wireless transmitter.

10. The method of claim 8 further comprising:
by the control circuit:
changing (104) the transmission frequency of the location-information wireless transmitter as a function of determining (103) that the level of interference at least exceeds a predetermined threshold.

11. The method of claim 10 further comprising:
by the control circuit:
monitoring (102) use of the stylus;
only changing the transmission frequency during use of the stylus.

12. The method of claim 11 wherein monitoring use of the stylus comprises detecting scribing pressure.
